# EUROPÄISCHE PATENTANMELDUNG

(11) **EP 1 248 181 A2**
(43) Veröffentlichungstag der Anmeldung: **09.10.2002**
(21) Anmeldenummer: 02007905.9
(22) Anmeldetag: 02.04.2002
(51) Int. Cl.: G06F 3/02, A63F 13/02, H04M 1/23

(54) **Aufsatzgerät für Mobiltelefon**

(30) Priorität: 06.04.2001 AT 2722001 U
(71) Anmelder: Neuner, Martin, 6175 Ranggen (AT)
(72) Erfinder: Neuner, Martin, 6175 Ranggen (AT)
(74) Vertreter: Hofinger, Engelbert, Dr.Dr.

(57) **Zusammenfassung**

Ein Aufsatzgerät zur Ausführung von Spielen auf einem Mobiltelefon (Handy) weist eine zumindest kreuzweise verschwenkbare Betätigungseinrichtung (4) für Tasten (2) oder Kontakte des Mobiltelefons (1) auf. Insbesondere ist ein mittlerer Steuerstift (6) längsverschiebbar angeordnet und einer mittleren Taste direkt zugeordnet.

## Beschreibung

Die Erfindung betrifft ein Aufsatzgerät zur Ausführung von Spielen auf einem Mobiltelefon (Handy), das ein Display und eine Tastatur aufweist.

Derartige Zusatzgeräte sind in verschiedenen Ausführungen bereits bekannt. So zeigt beispielsweise die DE 200 14 003 U ein aufschiebbares Element, in dem beispielsweise Spiele gespeichert sind, die mittels am aufschiebbaren Element vorgesehenen Tasten ausführbar sind. Das aufschiebbare Element weist eine Steckerleiste für die elektrische Verbindung mit dem Handy auf, und nützt dessen Display zur Anzeige des Spiels.

In der Zwischenzeit sind auch Mobiltelefone am Markt, in denen eine Spielefunktion vorgesehen ist, wobei die Spiele mittels in der Spielefunktion als Cursor- und Auslösetasten einsetzbaren Tasten ausführbar sind. Die Betätigung der kreuzweise angeordneten Tasten erfolgt im allgemeinen mittels der Finger beider Hände, wobei die notwendige Reaktionsschnelligkeit nur schwer erreichbar ist. Die Tasten können die Zifferntasten 2, 4, 6 und 8 sein. Andere Ausführungen weisen Zusatztasten auf, die an einer kreuzweisen kippbaren Taumelscheibe angeordnet sind.

Die Erfindung hat es sich nun zur Aufgabe gestellt, die Ausführung der Spiele zu erleichtern und löst dies dadurch, daß im Aufsatzgerät eine zumindest kreuzweise verschwenkbare Betätigungseinrichtung für entsprechend angeordnete Kontakte oder Tasten des Mobiltelefons gelagert ist. Die Betätigungseinrichtung ist insbesondere mittels eines Steuerstiftes verschwenkbar.

In bevorzugten Ausführungen kann vorgesehen sein, daß der Steuerstift einem mittleren Kontakt oder einer mittleren Zifferntaste direkt zugeordnet ist, und vorzugsweise in der Betätigungseinrichtung längsverschiebbar gelagert ist. Eine derartige als Joystick bezeichnete Betätigungseinrichtung ist von Spielecomputern hinreichend bekannt, sodaß auf deren Details nicht eingegangen werden muß. Der Steuerstift kann weiters über eine Betätigungsplatte auch acht weiteren Zifferntasten zugeordnet sein, die die mittlere Zifferntaste umgeben, wodurch über die fünf Joystick-Standardkontakte hinausgehende Möglichkeiten gegeben sind.

Der Ergänzungsteil weist bevorzugt einen auf dem Mobiltelefon verrastbaren Bügel auf, der in Form und Rastenausbildung an das jeweilige Mobiltelefon angepaßt ist.

Nachstehend wird nun die Erfindung an Hand der Figuren der beiliegenden Zeichnung näher beschrieben.

Es zeigen:
Fig. 1 und 2 das erfindungsgemäße Aufsatzgerät in Längs- und Querschnitt auf dem schematisch dargestellten Mobiltelefon,
Fig. 3 eine Draufsicht auf das Aufsatzgerät, und
Fig. 4, 5 und 6 mögliche Zuordnungen zur Zifferntastatur, sowie zu einer runden und zu einer elliptischen Taumelscheibe.

Das Aufsatzgerät 3 weist insbesondere die Form eines Aufschubbügels auf, an den federnde seitliche Laschen 7 mit Rastelementen auf die in Form und Anordnung an das jeweilige, nur schematisch im Schnitt gezeigte Mobiltelefon 1 angepaßt sind. Das Aufsatzgerät 3 überdeckt in einer ersten Ausführung die Zifferntasten 2 Eins bis Neun der Tastatur und in einer zweiten Ausführung eine Taumelscheibe des Mobiltelefons, unter der Kontakte 8 angeordnet sind.

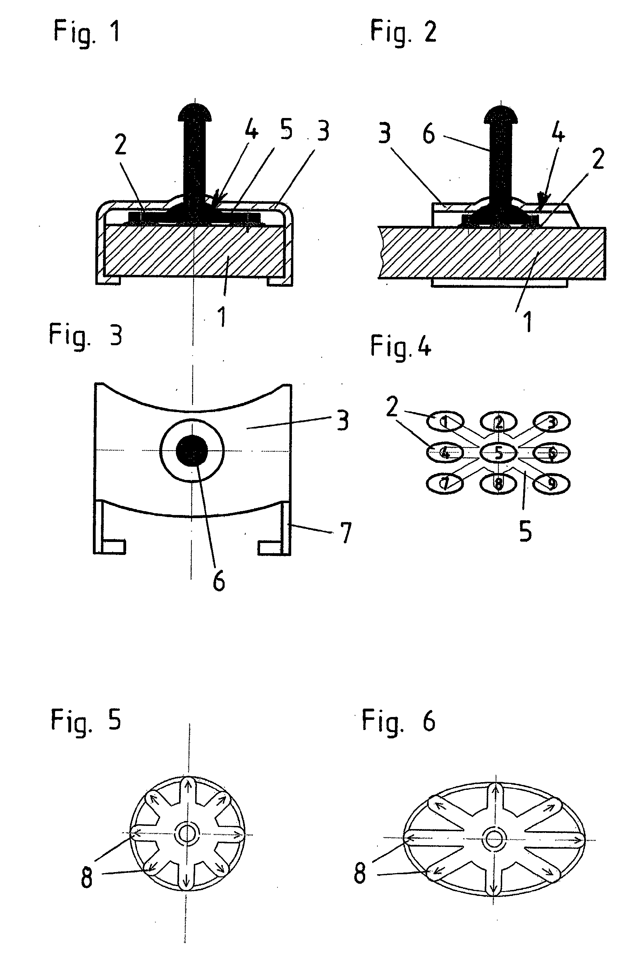

Das Aufsatzgerät lagert eine Betätigungseinrichtung 4, die eine Betätigungsplatte 5 mit zumindest vier, oder, wie in den Fig. 4 bis 6 gezeigt, acht strahlenförmig angeordneten Armen, und einen nach außen hochstehenden Betätigungsstab aufweist, der mit einem Steuerstift 6 versehen ist. Die Betätigungseinrichtung ist allseitig, zumindest aber in Richtung jeder Verbindungsgeraden einander gegenüberliegender Zifferntasten 2 oder Kontakte 8 schwenkbar gelagert, sodaß jede der vier oder acht außenliegenden Zifferntasten 2 bzw. über die Taumelscheibe jeder Kontakt 8 einzeln gedrückt werden kann. Der Steuerstift 6 ist längsverschiebbar und drückt direkt auf die darunterliegende Zifferntaste, die als Auslösetaste fungiert, oder auf einen mittleren Kontakt unter der Taumelscheibe, wenn diese eine Mittelöffnung aufweist. Da die Tasten einer Mobiltelefontastatur selbstrückstellend sind, benötigt das Aufsatzgerät keine Rückstelleinrichtung in eine mittlere Ruhestellung, wie sie in der Fig. 1 und 2 gegeben ist.

## Patentansprüche

1. Aufsatzgerät zur Ausführung von Spielen auf einem Mobiltelefon (Handy), das ein Display und eine Tastatur aufweist, **dadurch gekennzeichnet, daß** im Aufsatzgerät (3) eine zumindest kreuzweise verschwenkbare Betätigungseinrichtung (4) für zumindest kreuzweise angeordnete Kontakte (8) oder Tasten (2), insbesondere Zifferntasten, des Mobiltelefons (1) gelagert ist.

2. Aufsatzgerät nach Anspruch 1, **dadurch gekennzeichnet, daß** die Betätigungseinrichtung (4) mittels eines Steuerstiftes (6) verschwenkbar ist.

3. Aufsatzgerät nach Anspruch 2, **dadurch gekennzeichnet, daß** der Steuerstift (6) einem mittleren Kontakt (8) oder einer mittleren Taste (2) direkt zugeordnet ist.

4. Aufsatzgerät nach einem der Ansprüche 1 bis 3, **dadurch gekennzeichnet, daß** der Steuerstift (6) in der Betätigungseinrichtung (4) längsverschiebbar gelagert ist.

5. Aufsatzgerät nach einem der Ansprüche 2 bis 4, **dadurch gekennzeichnet, daß** die Betätigungseinrichtung (4) eine Betätigungsplatte (5) aufweist, und der Steuerstift (6) über die Betätigungsplatte (5) acht weiteren Tasten (2) insbesondere Zifferntasten zugeordnet ist, die die mittlere Zifferntaste umgeben.

6. Aufsatzgerät nach einem der Ansprüche 1 bis 5, **dadurch gekennzeichnet, daß** das Aufsatzgerät (3) als auf dem Mobiltelefon (1) verrastbarer Bügel ausgebildet ist.
